# EUROPEAN PATENT APPLICATION

(11) **EP 4 191 525 A1**
(43) Date of publication of application: **07.06.2023**
(21) Application number: 21212502.5
(22) Date of filing: 06.12.2021
(51) Int. Cl.: G06T 7/62

(54) **SYSTEMS AND METHODS FOR ANALYZING BLOOD VESSEL IMAGES**

(71) Applicant: Koninklijke Philips N.V., 5656 AG Eindhoven (NL)
(72) Inventor: VAN LAVIEREN, Martijn Anne, Eindhoven (NL); SPOEL, Cornelis Willem Johannes Immanuël, Eindhoven (NL)
(74) Representative: Philips Intellectual Property & Standards

(57) **Abstract**

The invention provides a system and a computer implemented method of analyzing an angiography image of a plurality of vessels. A vessel image is processed to determine a contrast intensity profile of the vessel image, wherein the contrast intensity profile comprises contrast intensity as a function of vessel diameter. A relationship between contrast intensity and vessel diameter is determined based on the contrast intensity profile, and if the contrast intensity profile comprises an outlier, a vessel correction outcome is determined.

## Description

### FIELD OF THE INVENTION

The present invention is directed to systems and methods for analyzing an angiogram, particularly for the purpose of hemodynamic modelling.

### BACKGROUND OF THE INVENTION

Angiography is an imaging technique in which blood vessels that have been injected with a contrast dye are imaged, using X-rays, to view the blood vessels. The contrast dye is radiopaque, making it possible to see the vessels clearly in the X-ray image. Imaging a blood vessel in this way can allow the vessel geometry, such as the vessel diameter, to be measured. Additionally, by tracking the flow of the contrast dye it is possible to track the flow of blood in the vessels. With these techniques, angiography can be used to investigate potential health issues affecting blood vessels.

Another tool that can assist in the diagnostic assessment of a patient is the computational modelling of the cardiovascular system to simulate hemodynamics. The cardiovascular system can be modelled using computational fluid dynamics (CFD) models, lumped parameter hemodynamic models, or a combination of both. Medical images, such as two-dimensional angiographic projections, can be used to reconstruct the geometry of the anatomy of interest (e.g. the vessel geometry of a coronary vessel). For example, the image can be used to estimate the cross-sectional area of a blood vessel based on the blood vessel diameter as measured from the medical image. The geometry of the anatomy of interest is then fed into a computational model of the cardiovascular system to simulate hemodynamics. The computational model can be used to obtain physiological information, e.g. Fractional Flow Reserve (FFR), instantaneous wave-Free Ratio (iFR).

As described above, angiography and hemodynamic modelling can be used to assist in the diagnostic assessment and treatment of a patient. However, these techniques have not been exploited to their full potential, at least partly because assumptions about vessel geometry based on the shape of the vessel in a two-dimensional image have limited accuracy.

Coronary artery disease affects 1 in 17 people worldwide. For two thirds of patients, presenting with a > 50% stenosis is physiologically significant. Coronary angiograms can be used in combination with CFD models and/or lumped parameter hemodynamic models to estimate the physiological severity of epicardial stenosis. The accuracy of that estimate depends on the accuracy of the model.

Hemodynamic modelling can be also be used to assist percutaneous coronary intervention (PCI). However, the use of hemodynamic modelling to assist PCI has not been widely adopted. Improving the accuracy of hemodynamic modelling would help to make the use of hemodynamic modelling to assist PCI easier and more effective.

### SUMMARY OF THE INVENTION

The invention is defined by the claims.

According to examples in accordance with an aspect of the invention, there is provided a computer implemented method of blood vessel analysis, the method comprising:
processing a blood vessel image, wherein the blood vessel image comprises a representation of a blood vessel extending along its longitudinal axis, to determine a contrast intensity profile of the blood vessel image, wherein the contrast intensity profile comprises contrast intensity data and blood vessel diameter data;
determining a relationship between contrast intensity and blood vessel diameter based on the contrast intensity profile;
determining whether the contrast intensity profile comprises an outlier; and
if the contrast intensity profile comprises an outlier, determining a vessel correction outcome.

For an embodiment the outlier is having a contrast intensity that is lower than an expected contrast intensity.

The blood vessel image may be a segmented, two-dimensional projection of a blood vessel. That is, the blood vessel image represents a cross-section of a blood vessel taken through its longitudinal axis or its centerline. The blood vessel image is analyzed, by the computer, to determine contrast intensity and blood vessel diameter at a plurality of locations along the longitudinal axis of the blood vessel. The contrast intensity is related to the flow of a contrast dye or contrast agent within the vessel that is imaged. Using this data, a function describing the relationship between the contrast intensity and the blood vessel diameter is constructed. The presence of an outlier, having a lower contrast intensity than is expected according to the function, may indicate that an "unseen" elliptic stenosis is present in the blood vessel at the location of the outlier. If the contrast intensity profile does not comprise an outlier having a lower contrast intensity than is expected, the method may comprise determining that no vessel correction is needed.

The method may further comprise:
receiving an angiography image of a plurality of blood vessels;
processing the angiography image to segment a blood vessel thereby generating a segmented blood vessel image; and
using the segmented blood vessel image as the blood vessel image.

Determining the contrast intensity profile may comprise determining a vessel diameter and a corresponding contrast intensity at a plurality of locations along the longitudinal axis.

Determining the vessel correction outcome may comprise (i) determining that an eccentric lesion is present and/or (ii) determining an area correction factor for correcting the cross-sectional area of the vessel at the location of the outlier and/or or (iii) determining a recommendation to obtain a second blood vessel image.

The vessel correction outcome may be determined based on a goodness of fit of the function expressing the relationship between the contrast intensity and the vessel diameter. If the fit is deemed acceptable, it may be determined that an eccentric lesion is present at the location of the outlier. If the fit is not deemed acceptable, it may be recommended that second blood vessel image is required.

The method may further comprise determining the cross-section area correction factor by:
determining an expected contrast intensity at the vessel diameter associated with the outlier based on the determined relationship between contrast intensity and blood vessel diameter; and
determining the area correction factor based on the expected contrast intensity and the contrast intensity of the outlier.

The area correction factor may be determined by taking the ratio of the contrast intensity of the outlier and the expected contrast intensity at the vessel diameter of the outlier.

Determining whether the contrast intensity profile comprises an outlier may comprise determining whether the contrast intensity values are within a reference contrast intensity range.

The vessel image may be a coronary angiography image.

According to an aspect of the invention, there is provided a method of image-based physiological modelling comprising:
carrying out the above-described method on a segmented blood vessel image;
generating an area assumption based on the segmented blood vessel image and the area correction factor; and
   using the area assumption in an image-based physiological model.

For example, the method may comprise:
generating an area assumption based on the segmented blood vessel image;
carrying out the above-described method on the segmented blood vessel image;
correcting the area assumption using the area correction factor, thereby generating a corrected area assumption; and
using the corrected area assumption in an image-based physiological model. The image based physiological model may be a computational fluid dynamics model or a lumped parameter model for hemodynamic simulation.

According to an aspect of the invention, there is provided a computer program comprising instructions which, when the program is executed by a computer, cause the computer to carry out any of the above-described methods.

According to an aspect of the invention, there is provided a computer-readable medium comprising instructions which, when executed by a computer, cause the computer to carry out any of the above-described methods.

According to an aspect of the invention, there is provided a method of blood vessel analysis by analyzing a vessel image, wherein the vessel image is an angiography image of a plurality of blood vessels, the method comprising:
processing a blood vessel image, wherein the blood vessel image comprises a representation of a blood vessel extending along a longitudinal direction, to determine a contrast intensity profile of the blood vessel image, wherein the contrast intensity profile comprises contrast intensity as a function of blood vessel diameter;
determining a relationship between contrast intensity and blood vessel diameter based on the contrast intensity profile;
determining whether the contrast intensity profile comprises an outlier; and
if the contrast intensity profile comprises an outlier, determining a vessel correction outcome.

In an embodiment the outlier has a contrast intensity that is lower than an expected contrast intensity.

Determining the vessel correction outcome may comprise (i) determining an area correction factor for correcting the cross-sectional area of the vessel diameter at the location of the outlier, or (ii) generating a request to obtain a second blood vessel image.

Determining the cross section area correction factor may comprise:
determining an expected contrast intensity at the vessel diameter associated with the outlier based on the determined relationship between contrast intensity and blood vessel diameter;
determining the area correction factor based on the expected contrast intensity and the contrast intensity of the outlier.

According to an aspect of the invention, there is provided a system for analyzing a blood vessel image comprising:
a memory comprising instruction data representing a set of instructions;
one or more processors configured to communicate with the memory and to execute the set of instructions, wherein the set of instructions, when executed by the processor cause the processor to carry out any of the computer implemented methods described above.

The system may further comprise an imaging device for obtaining an angiography image.

In a further aspect of the invention a system for vessel analysis is disclosed, comprising at least a processor configured to:
receive a vessel image comprising contrast dye within the vessel;
process the vessel image to determine a contrast intensity profile of the vessel image, wherein the contrast intensity profile comprises contrast intensity data and vessel diameter data;
determine a relationship between contrast intensity and vessel diameter based on the contrast intensity profile;
determine whether the contrast intensity profile comprises an outlier; and
determine a vessel correction outcome if the contrast intensity profile comprises an outlier. The vessel correction outcome can be displayed on a display and/or can be used in computational model to obtain physiological information such as FFR, iFR or microvascular resistance.

In an embodiment of the system, determining the contrast intensity profile comprises determining a vessel diameter and a corresponding contrast intensity at a plurality of locations along a longitudinal axis or a centerline of the vessel.

In an embodiment of the system, the vessel image comprises a representation of a vessel extending along its longitudinal axis.

In an embodiment of the system, determining whether the contrast intensity profile comprises an outlier comprises determining whether the contrast intensity values are within a reference contrast intensity range.

In an embodiment of the system, the outlier has a contrast intensity that is lower than an expected contrast intensity.

In an embodiment of the system, the processor is further configured to:
determine that an eccentric lesion is present and/or;
determine a recommendation to obtain a second vessel image.

In an embodiment of the system, the processor is further configured to:
determine an area correction factor for correcting the cross-sectional area of the vessel at the location of the outlier.

In an embodiment of the system, determining the area correction factor comprises:
determining an expected contrast intensity at the vessel diameter associated with the outlier based on the determined relationship between contrast intensity and vessel diameter; and
determining the area correction factor based on the expected contrast intensity and the contrast intensity of the outlier.

In an embodiment of the system, the processor is further configured to:
receive an angiography image of a plurality of blood vessels;
process the angiography image to segment a blood vessel thereby generating a segmented blood vessel image; and
use the segmented blood vessel image as the vessel image.

In an embodiment of the system, the processor is further configured to:
generate an area assumption based on the segmented blood vessel image and the area correction factor; and
use the area assumption in an image-based physiological model, such as for example FFR, iFR or microvascular resistance.

The system may further comprise:
an imaging device for obtaining the vessel image; and
a display configured for displaying the vessel image and/or the vessel correction outcome.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a method of blood vessel analysis according to an embodiment of the invention;
Figure 2 is a schematic diagram illustrating the measurement of blood vessel diameter;
Figure 3 is a schematic illustration of a contrast intensity profile;
Figure 4 illustrates a method of hemodynamic modelling according to an embodiment of the invention; and
Figure 5 is a schematic diagram illustrating a system according to an embodiment of the invention.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a system and a computer implemented method of blood vessel analysis, in which an image representing a blood vessel is analyzed to determine contrast intensity data and vessel diameter data by measuring the contrast intensity and the vessel diameter at multiple locations along the blood vessel. The contrast intensity data and vessel diameter data form a contrast intensity profile. The contrast intensity profile is analyzed to determine a relationship between contrast intensity and vessel diameter. For example, the analysis of the contrast intensity profile may determine an equation expressing contrast intensity as a function of vessel diameter. The contrast intensity profile is then further analyzed, with reference to the relationship between contrast intensity and vessel diameter, to determine if the contrast intensity profile comprises an outlier. The presence of an outlier may indicate that the blood vessel represented in the blood image includes an elliptic stenosis that is not apparent from the vessel diameter data derived from the angiogram. That is, while the blood vessel in the image does not appear to have any narrowing at the point along the vessel corresponding to the outlier, in reality, narrowing of the vessel may is present at that location.

The inventors have realized that since an angiogram is a two-dimensional projection and only shows one cross section of a blood vessel, it does not reliably show if stenosis (abnormal narrowing of the blood vessel) is present. Accordingly, where the image is provided as an input into a hemodynamic model, it may compromise accuracy of that model. Moreover, the inventors have found that by obtaining and analyzing the contrast intensity profile of the angiogram, it is possible to identify locations at which narrowing of the blood vessel that is not apparent from the angiogram may be present. This can help to facilitate improved angiogram analysis.

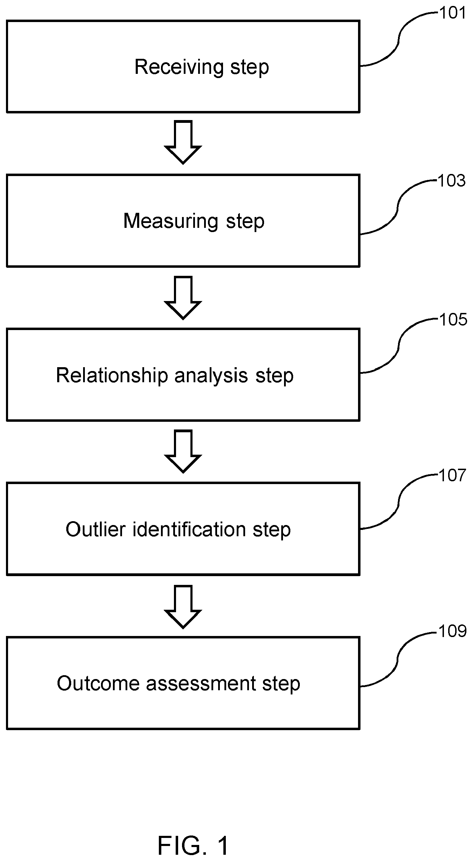

FIG. 1 illustrates a computer-implemented method of blood vessel analysis according to an embodiment of the invention.

An angiogram may be acquired by X-ray imaging equipment and may be stored in a memory. In a receiving step 101, a computer comprising a processor configured to carry out the blood vessel analysis method receives the angiogram. The computer may obtain the angiogram from the memory. The angiogram may have been pre-processed before it is sent to the computer. For example, the image may have been subject to image processing in order to segment the blood vessel. Additionally, if the segmented blood vessel is curved, the segmented blood vessel image may have been subject to conventional image-processing techniques for straightening the blood vessel. Alternatively, the computer may comprise a processor configured to segment the blood vessel to provide a segmented blood vessel image and to straighten the blood vessel (if required) after receiving the angiogram. Accordingly, the blood vessel image in the subsequent steps is a segmented blood vessel image in which the blood vessel extends along its longitudinal axis.

Next, in a measuring step 103, the blood vessel image is analyzed to determine the contrast intensity and vessel diameter at each of a plurality of locations along the blood vessel. The contrast intensity is measured by selecting a subset of pixels that form a slice of the segmented blood vessel transverse to its longitudinal axis. The intensity of the pixels forming the slice is determined, in order to calculate the contrast intensity associated with the longitudinal position at which the slice of vessel is located. The intensity of the pixels may be determined using any conventional approach for assessing intensity. In an example, the average pixel intensity and standard deviation for pixel intensity are determined based on all of the pixels in the slice. The contrast intensity is then determined by selecting pixels having an intensity within one standard deviation, and determining the average intensity value of those pixels. In that example, pixels with an intensity outside of the standard deviation do not contribute to the calculated contrast intensity. Further example of determining contrast intensity can be found for example in the European patent application number 21290061.7, entitled "Determining lumen flow parameters", which is incorporated by reference.

The vessel diameter is determined by calculating the distance, in a direction transverse to the longitudinal axis of the segmented blood vessel, from one side of the vessel to the opposing side.

The contrast intensity data and vessel diameter data, which are obtained at the different longitudinal positions along the segmented blood vessel, form a contrast intensity profile. Each data point in the contrast intensity profile represents the contrast intensity and vessel diameter at a particular longitudinal position along the segmented blood vessel. The contrast intensity and vessel diameter may be measured for a plurality of equally spaced longitudinal positions along the segmented blood vessel.

In a relationship analysis step 105, the contrast intensity profile is analyzed to determine a relationship between vessel diameter and contrast intensity. The relationship may be determined by carrying out a fitting procedure to fit a function to the data points forming the contrast intensity profile i.e. by constructing a curve or mathematical function that approximately fits the contrast intensity profile. The relationship is defined by the function, and expresses the expected contrast intensity value as a function of vessel diameter.

In an outlier identification step 107, data points that represent outliers with respect to the relationship between contrast intensity and vessel diameter (i.e. the relationship determined in the relationship analysis step 105), are identified.

It will be appreciated that there are various ways in which outliers can be determined. As an example, the outliers may be identified by, for each data point, determining an expected contrast intensity value according to the contrast intensity-vessel diameter relationship, and assessing whether the data point has a contrast intensity that is significantly smaller or significantly larger than the expected value. If the contrast intensity value is significantly smaller or significantly larger than the expected value, the data point is considered an outlier. The contrast intensity value may be considered to be significantly smaller or significantly larger than the expected value if it is outside of a reference range. The reference range may be defined as a percentage e.g. 10 % of the expected contrast intensity value. Alternatively, the reference range may be defined by the average amount by which the data points of the contrast intensity profile differ from their corresponding expected values.

In an outcome assessment step 109, the method determines a vessel correction outcome. The vessel correction outcome may indicate that an elliptic lesion is present at the location of an outlier having a lower contrast intensity than the expected value and its location. The vessel correction outcome may provide a correction factor associated with the location of the outlier, or indicate that a further angiogram is required.

Where an eccentric lesion is present, it may only be apparent in certain cross-sectional views of the blood vessel. The inventors have realized that, by identifying outliers having a lower contrast intensity than expected, it is possible to identify regions of the vessel in which an eccentric lesion may be present, even if this is not apparent from the vessel diameter of the cross section of the vessel shown in the angiogram. In particular, the inventors have realized that a region in which an unseen stenosis of the blood vessel is present will have a contrast intensity that is low compared to an expected contrast intensity for the vessel diameter measured from the angiogram at that location.

Accordingly, if an outlier is identified, and the outlier has a contrast intensity that is low compared to the expected contrast intensity for that vessel diameter, it is determined that an eccentric lesion is present at the location of the outlier. This information can be used to assist interpretation of the angiogram. It can also be used to achieve improved hemodynamic modelling. In particular, since angiograms are used to provide specific anatomical information - such as blood vessel geometry - information indicating that the blood vessel shown in the angiogram comprises an eccentric lesion that is not apparent from the vessel diameter represented by the angiogram can be used to improve the model.

In particular, the blood vessel diameter derived from an angiogram may be used to calculate a cross sectional area of the blood vessel at the corresponding longitudinal position. If an eccentric lesion is present at the location of the outlier, but is not apparent from the angiogram, the cross-sectional area of the blood vessel will be assumed to be larger than is anatomically accurate. To address this, in some embodiments, the method further comprises determining a correction factor associated with the vessel diameter at the location of the outlier.

The correction factor may be determined based on the relative magnitude of the contrast intensity of the outlier and the expected contrast intensity at the vessel diameter of the outlier. The correction factor may be determined by determining the contrast intensity of the outlier as a percentage of the expected contrast intensity at the vessel diameter of the outlier. For example, it may be determined that the contrast intensity of the outlier is 70% of the expected contrast intensity, providing a correction factor of 0.7.

The correction factor can be used to correct the cross-section area of the blood vessel at the location of the outlier, which is calculated based on the measured vessel diameter. That is, the cross-sectional area of the vessel (as determined from the vessel diameter derived from the angiogram) is multiplied by the correction factor to determine a corrected cross sectional area.

Determining the vessel correction outcome may comprise determining whether the relationship between the contrast intensity and the blood vessel diameter is reliable. This may be achieved by evaluating the goodness of fit. If it is determined that the relationship is not reliable (e.g. if the confidence level is less than 90 %), the vessel correction outcome is to recommend that a second angiogram is obtained for analysis. The above-described method may then be repeated based on the second angiogram.

Evaluating the goodness of fit may comprise determining the number of outliers identified in the outlier identification step. If the number of outliers is above a threshold value, the relationship between the contrast intensity and blood vessel diameter may not be considered reliable.

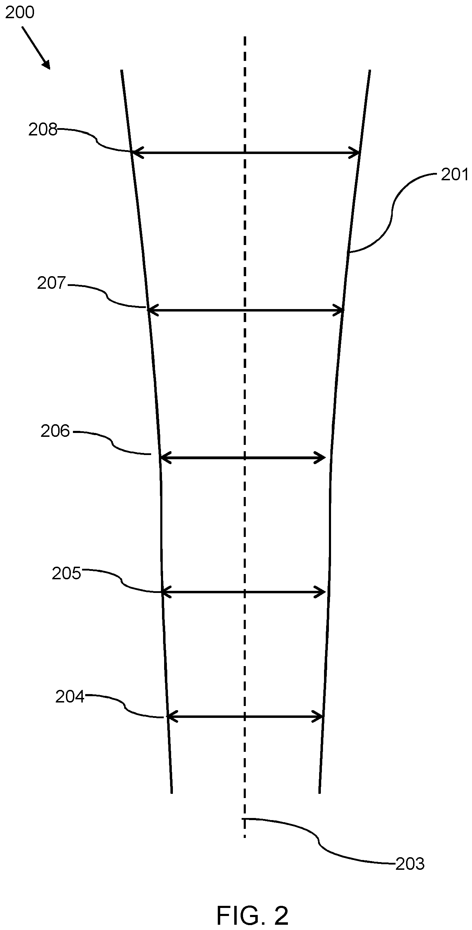

FIG. 2 is a schematic diagram illustrating the measurement of vessel blood vessel diameter. The image represents a two-dimensional angiographic projection, in which the blood vessel 201 has been segmented. The segmented blood vessel image 200 has also been straightened using appropriate image processing techniques. Accordingly, the blood vessel 200 extends along a longitudinal axis 203. Contrast profile data is measured at a plurality of locations 204, 205, 206, 207, 208 along the longitudinal axis 203. At each location the vessel diameter is measured by determining the distance from one side of the blood vessel to the opposite side of the blood vessel, in a direction transversal to the longitudinal axis. Additionally, at each location, the contrast intensity associated with the slice of the vessel along which the diameter is measured is determined. It will be appreciated that while, for ease of illustration, only five locations for determining contrast intensity profile data are shown, more data points would be obtained in practice.

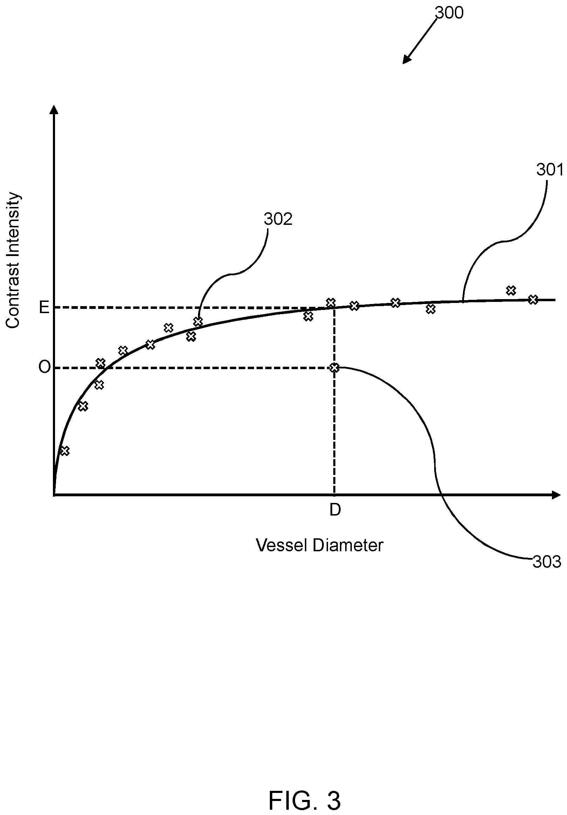

FIG. 3 is a schematic illustration of a contrast intensity profile 300 obtained from a two-dimensional angiographic projection of a blood vessel, in which the blood vessel has been segmented and straightened. Each data point (represented by an "x") plots the blood vessel diameter and corresponding contrast intensity for a particular position along the longitudinal axis. The curve 301 has been fitted to the data points; it plots the expected contrast intensity as a function of vessel diameter. The curve 301 represents the relationship between vessel diameter and contrast intensity, based on the data obtained from the two-dimensional angiographic projection of the blood vessel.

As shown in FIG. 3, not all of the data points fall on the curve 301. Some of the data points, for example data point 302, lie close to the curve. In FIG. 3, data point 303 is an outlier; it has a contrast intensity value "O" that is significantly different to the expected contrast intensity "E" value at the vessel diameter "D". The data point 303 is then outside the reference range, e.g. the deviation from the expected contrast intensity value is larger than 10 % of the expected contrast intensity value. As will be appreciated, outliers can be identified using conventional outlier detection techniques.

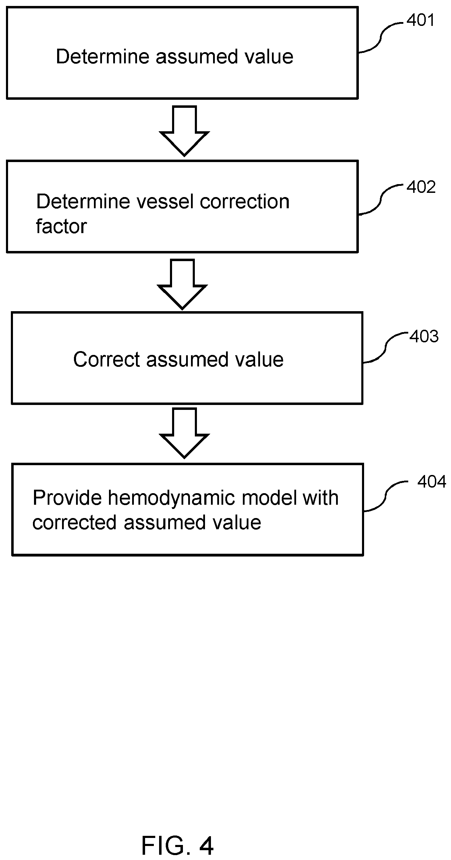

FIG. 4 illustrates a method of hemodynamic modelling according to an embodiment of the invention.

In the method illustrated in FIG. 4, a hemodynamic model is constructed based on an assumed vessel geometry. The assumed vessel geometry is obtained from an angiogram, by measuring the diameter of the representation of the blood vessel at multiple locations along its longitudinal axis. For each measurement, a corresponding cross-sectional area is calculated. For example, it may be assumed that the cross-sectional area of the vessel is substantially circular. Accordingly, in an initial step 401, the method determines an assumed vessel cross sectional area based on a measured vessel diameter.

In order to improve the accuracy of the model, a correction factor is determined (step 402) by carrying out the method described in relation to FIG. 1.

Next, the product of the correction factor and the assumed vessel cross sectional area is determined, to obtain a corrected area assumption (step 403). The corrected area assumption is then provided an as input into a hemodynamic model. This can be repeated at multiple locations along the blood vessel, to further improve the accuracy with which the blood vessel is modeled. Once the corrected area assumptions have been determined for all of the multiple locations along the blood vessel, and the model has been provided with the corrected area assumptions, the hemodynamic modelling can be performed.

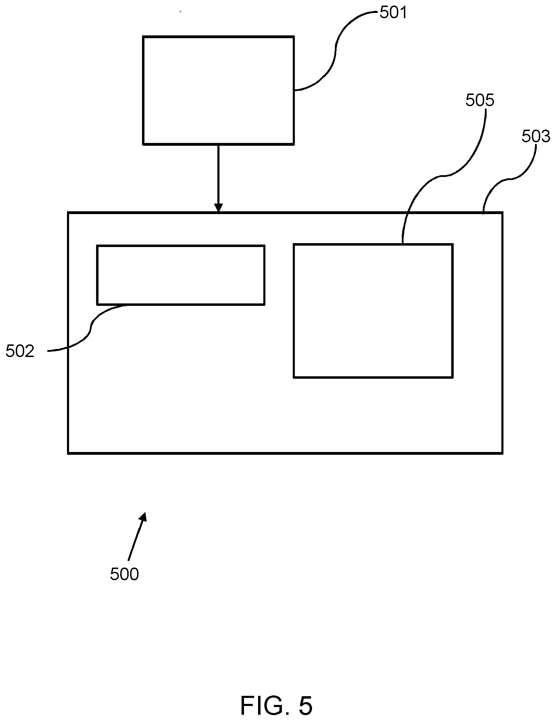

FIG. 5 is a schematic diagram illustrating a system 500 according to an embodiment of the invention. The system comprises an imaging system 501 for acquiring a two-dimensional angiographic projection of a blood vessel. The imaging system 501 is configured to obtain an angiogram and sends it to the computer 503, which comprises a memory 502 and a processor 505. The computer 503 may store the angiogram in a memory 502. The processor is configured to segment the blood vessel image received from the imaging system 501 and may be configured to subject the segmented blood vessel image to a straightening process, to obtain an image of the blood vessel in which the blood vessel extends along a longitudinal axis.

The processor is configured to process the segmented blood vessel image to determine a contrast intensity profile, determine a relationship between contrast intensity and blood vessel diameter, determine whether the contrast intensity profile comprises an outlier and, if the contrast intensity profile comprises an outlier, determine a vessel correction outcome. As described above, the vessel correction outcome may comprise determining whether the relationship between the contrast intensity and the vessel diameter determined from the contrast intensity profile is reliable, by determining the goodness of fit. If the relationship is determined to be reliable, it may be determined that an elliptic stenosis is present in the vessel at a location where an outlier has a lower contrast intensity than is expected for the corresponding vessel diameter. In some embodiments, an area correction factor may be calculated. If the goodness of fit is poor (e.g. a confidence level associated with the relationship is less than 90%), the vessel correction outcome may comprise recommending that another angiographic image should be obtained. The outcome can be output to a display of the system, not shown in FIG. 5. For the conciseness of the description, any of the features described relevant to any of the embodiment of the methods or computer implemented methods are applicable and contemplated for the corresponding embodiments of the system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A system for vessel analysis, the system comprising a processor configured to:
receive a vessel image comprising contrast dye in the vessel; process the vessel image to determine a contrast intensity profile of the vessel image, wherein the contrast intensity profile comprises contrast intensity data and vessel diameter data;
determine a relationship between contrast intensity and vessel diameter based on the contrast intensity profile;
determine whether the contrast intensity profile comprises an outlier; and
determine a vessel correction outcome if the contrast intensity profile comprises an outlier.

2. The system of claim 1, wherein determining the contrast intensity profile comprises
determining a vessel diameter and a corresponding contrast intensity at a plurality of locations along a longitudinal axis or a centerline of the vessel.

3. The system of claim 1 or 2, wherein the vessel image comprises a representation of a vessel extending along its longitudinal axis.

4. The system of any of the preceding claims, wherein determining whether the contrast intensity profile comprises an outlier comprises determining whether the contrast intensity values are within a reference contrast intensity range.

5. The system of any of the preceding claims, wherein the outlier has a contrast intensity that is lower than an expected contrast intensity.

6. The system of any of the preceding claims, wherein the processor is further configured to:
determine that an eccentric lesion is present and/or;
determine a recommendation to obtain a second vessel image.

7. The system of any of the preceding claims, wherein the processor is further configured to:
determine an area correction factor for correcting the cross-sectional area of the vessel at the location of the outlier.

8. The system of claim 7, wherein determining the area correction factor comprises:
determining an expected contrast intensity at the vessel diameter associated with the outlier based on the determined relationship between contrast intensity and vessel diameter; and
determining the area correction factor based on the expected contrast intensity and the contrast intensity of the outlier.

9. The system of any of the preceding claims, wherein the processor is further configured to:
receive an angiography image of a plurality of blood vessels;
process the angiography image to segment a blood vessel thereby generating a segmented blood vessel image; and
use the segmented blood vessel image as the vessel image.

10. The system of claim 9, wherein the processor is further configured to:
generate an area assumption based on the segmented blood vessel image and the area correction factor; and
use the area assumption in an image-based physiological model.

11. The system of any of the preceding claims, wherein the system comprises:
an imaging device for obtaining the vessel image; and
a display configured for displaying the vessel image and/or the vessel correction outcome.

12. A computer implemented method of vessel analysis, comprising:
receiving a vessel image comprising contrast dye within the vessel;
processing the vessel image to determine a contrast intensity profile of the vessel image, wherein the contrast intensity profile comprises contrast intensity data and vessel diameter data;
determining a relationship between contrast intensity and vessel diameter based on the contrast intensity profile;
determining whether the contrast intensity profile comprises an outlier; and
determining a vessel correction outcome if the contrast intensity profile comprises an outlier.

13. The computer implemented method of claim 12, wherein the outlier has a contrast intensity that is lower than an expected contrast intensity.

14. The computer implemented method of claim 12 or 13, further comprising
receiving an angiography image of a plurality of blood vessels;
processing the angiography image to segment a blood vessel thereby generating a segmented blood vessel image; and
using the segmented blood vessel image as the vessel image.

15. The computer implemented method of any of the claims 12 to 14, wherein determining the vessel correction outcome comprises:
determining that an eccentric lesion is present and/or
determining an area correction factor for correcting the cross sectional area of the vessel at the location of the outlier and/or
determining a recommendation to obtain a second blood vessel image.
